# EUROPEAN PATENT APPLICATION

(11) **EP 0 530 128 A1**
(43) Date of publication of application: **03.03.1993**
(21) Application number: 92610063.7
(22) Date of filing: 27.08.1992
(51) Int. Cl.: B62D 51/00

(54) **A coupling system with lever**

(30) Priority: 30.08.1991 DK 1534/91
(71) Applicant: ANDREAS PETERSEN HOEJBY ApS, DK-5260 Odense S (DK)
(72) Inventor: Hansen, Hans Ostergaard, DK-5270 Odense N (DK)
(74) Representative: Larsen, Hans Ole

(57) **Abstract**

The coupling system according to the invention enables a very secure and practical utilization to be achieved, and a built-in selector can be used to determine which control cable is to be activated.

The movable part (4) of the coupling system (1) is configured as a section of a tube which surrounds the fixed grip (9) in all positions, whereby the lever is built-in and protected. The cable (11) is secured to the movable part (4) in a carrier (23) which is provided with a gate (27) for a pawl (8) which can be selectively turned into and out of the gate (27) to determine which of the control cables is to be activated.

Finally, the cable is provided with a self-adjusting arrangement in the form of a spring-loaded bush (14) for the lower end of the cable tube (12), which will ensure that a lengthening of the cable (11) will be taken up by the spring (17), in that this is compensated for by the extension of the spring (17).

## Description

### Background of the invention

The invention relates to a coupling system, preferably for use on a machine which is required to be operated by remote control, and comprising a coupling grip with a fixed and a movable part, and with a control cable comprising an outer tube with an inner cable which is secured to the movable part and extends to an operating part such as a coupling arm, so that the coupling arm is moved when the movable part of the coupling system is activated.

With motor-driven carriages, implements, tools and similar equipment which must be capable of operation by the user by the activation of one or more levers, coupling systems of this kind are incorporated for the control of the transfer of the engine power to the power-driven element or elements. This is normally effected by the activation of the coupling lever for the coupling or the decoupling of the engine power.

Hitherto-known coupling levers are configured as a fixed hand grip to which is mounted a movable lever which can be squeezed towards the fixed hand grip.

By securing a control cable to the foremost part of the movable lever at a suitable distance from its axis of rotation, the cable will be retracted by activation of the lever.

Examples of such coupling systems are known from German publication no. 3,744,419 and French publication no. 2,622,861.

However, all of these known systems suffer the disadvantage that they are very tiring to hold permanently activated, the reason being that they are narrow and thus load the hand by far too high surface pressure.

To this can also be added that when activated they project out from the fixture point, which is inconvenient when the greatest possible degree of streamlining is required, for example to prevent the hand grip from getting firmly caught up in foreign objects such as branches and the like.

Furthermore, the known systems provide no protection against the fingers of the user getting pinched when the fingers are between the foremost part of the lever at the cable fixture and the fixed part when, for example, the lever is released at deactivation.

### Advantages of the invention

According to the invention, by configuring the movable part of the coupling system as a section of a tube which can surround the fixed part of the grip when the lever is activated, a considerably more convenient handling is achieved, in that the movable part will constitute a shell which will surround the fixed part in such a manner that the whole coupling system can be enclosed by the hand, whereby the lever becomes just as convenient as the fixed part. Tiredness is thus avoided, and latching members or locking pawls for securing the movable part in the activated state can be completely eliminated. This means a simplified and far more secure operation of the equipment. This is of exceptionally great significance, since the coupling system according to the invention thus serves as a safety grip whereby decoupling is effected immediately if the lever is released. This can prevent many accidents and damage.

Finally, the configuration as a shell contributes towards the shielding of the lever and the cable in such a manner that there is no possibility of the user's fingers getting pinched. Similarly, there will be no risk of the coupling lever being able to get caught up in other things such as branches and scrub and the like, and the function can therefore always be ensured under all conditions of operation.

As disclosed in claim 2, by building in a selector in the form of a pawl, the user can select by hand whether the cable is to be coupled or decoupled by the lever. The function of the lever itself can hereby be decoupled, which can have both practical advantages and advantages from the point of view of safety.

As disclosed in claim 3, by providing the lever with two control cables, the position of the pawl can be used to select which of the cable controls is desired to be activated, or possibly to completely decouple the function of the lever. This provides the possibility of the operation of, for example, two different tools, gearing or the like.

As disclosed in claim 4, by fitting the movable part of the grip on the same axle, the functioning of the two control cables will be the same thus permitting a simple configuration of the grip.

As disclosed in claim 5, by allowing the cable in activated state to lie in front and close to the carriers, and therewith the axis of rotation of the movable lever, the lever arm is thus reduced in activated state, whereby the lever is easy to hold activated without reducing its function as safety grip.

As disclosed in claim 6, by mounting the control cable on the frame by means of a clamping block which clamps around the outer cable tube, the mounting and adjustment of the control cable can be carried out in a simple manner.

As disclosed in claim 7, by allowing the other end of the cable tube to be spring loaded, this will automatically take up the slack which will manifest itself in the wear of drive belts, chain drives and the like, whereby the adjustment of the control cable will occur automatically.

Finally, as disclosed in claim 8, it is expedient to allow the cable tube to rest against a tubular bush inside a spring, in that this results in a good control of the cable and protection against deformation of the cables, for example during their possible bending when the frame parts are being folded together.

### The drawing

In the following section, an example embodiment of the invention will be described in more detail with reference to the drawing, where
fig. 1 shows the coupling system mounted on a soil preparation machine,
fig. 2 shows the handlebar with fixture element, coupling lever and control cable seen from the side,
fig. 3 shows the actual fixture element seen from above,
fig. 4 shows a section through the fixture element seen in the direction IV-IV in fig. 3,
fig. 4a shows a section through a second embodiment of the fixture element,
fig. 5 shows the actual coupling lever and the coupling drive seen from the side,
fig. 6a shows a section through the lever engaged with a cable, and seen in the direction VI-VI in fig. 5, and
fig. 6b shows a section through the same lever in engagement with the second cable seen in the direction VI-VI in fig. 5.

### Description of the example embodiment

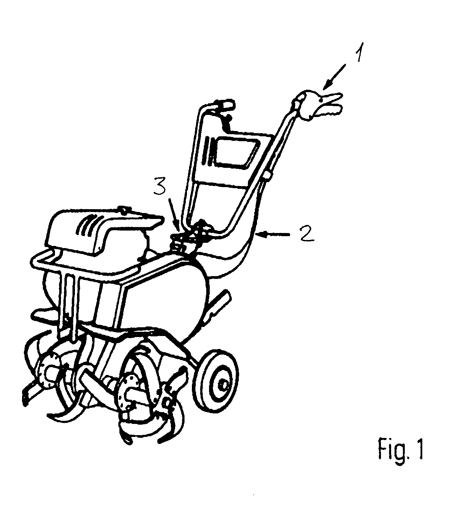

The invention will be described mounted on a soil preparation machine as shown in fig. 1, but the invention will be able to be used on all forms of equipment where it is required to be able to operate one or more cables by means of a coupling lever.

The example in fig. 1 shows a handlebar 10 with coupling lever 1 mounted on the left-hand side, while for example the throttle can be mounted on the right-hand side.

The coupling lever 1 is connected to the coupling and the gearbox via two control cables 2, and therefore it will be possible to engage the coupling for forwards movement via the one cable and reverse or second gear via the other cable. The machine can thus be controlled and operated from the hand grips on the handlebar.

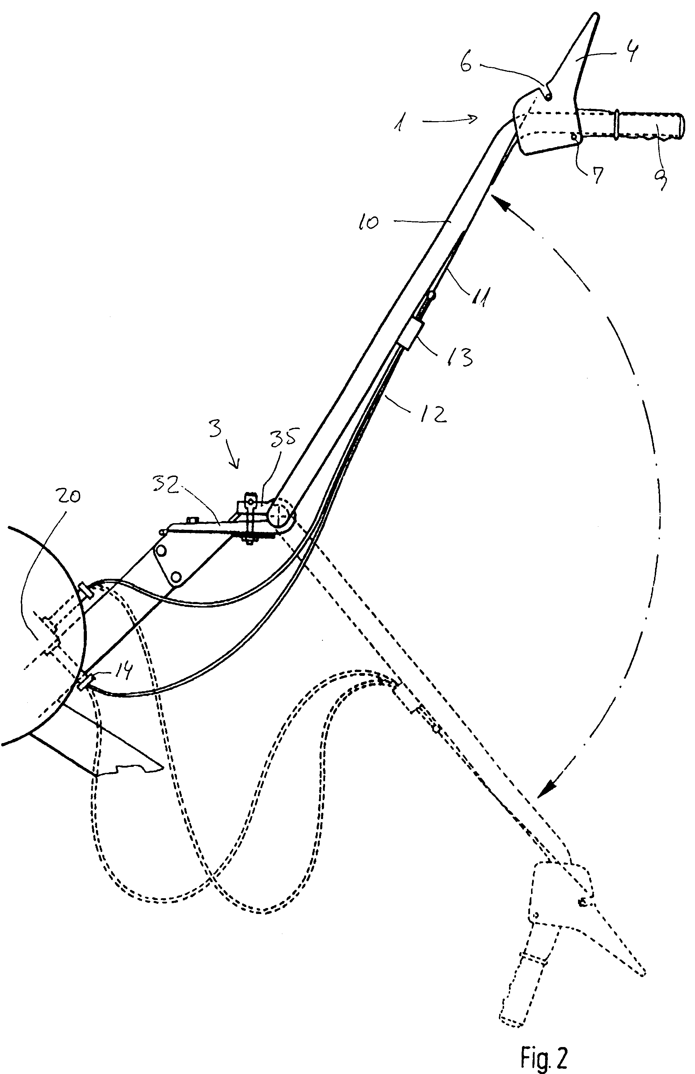

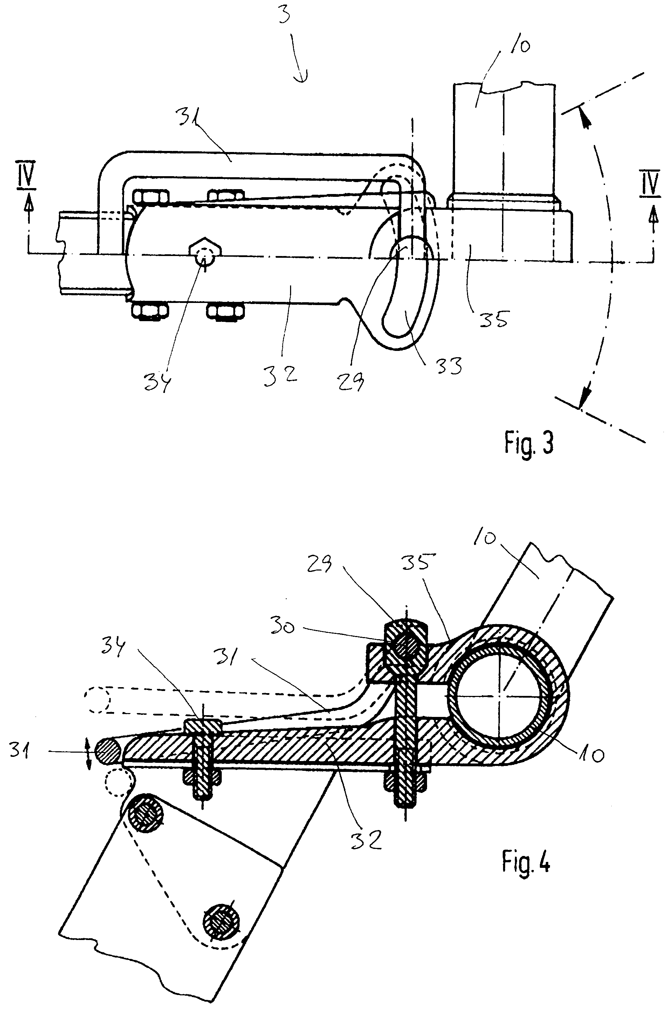

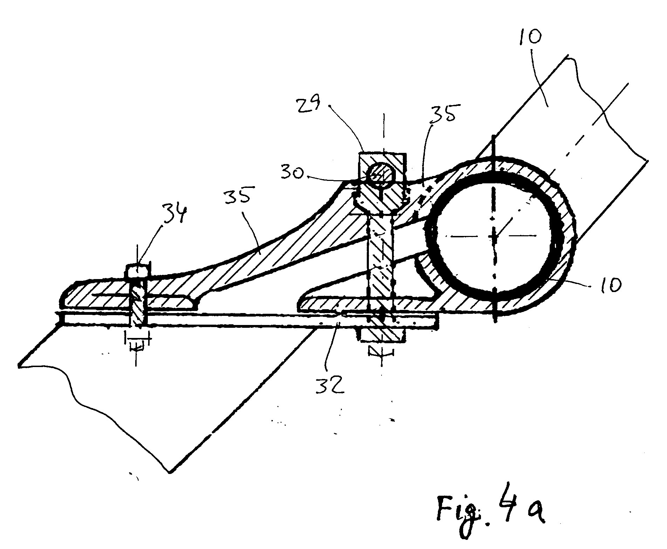

Fig. 2 shows the handlebar 10 secured to a fixture element 3 which is secured to the machine. This fixture element is shown in more detail in figs. 3 and 4.

The handlebar 10 is configured as a U-shaped tube, the centre piece of which extends horizontally and is inserted in a clamp on a pivot plate 32 which can be turned around a bolt 34 on the frame part. The fixture is provided with a slot 33 through which a securing bolt 29 can extend. The plate extends around the handlebar 10 in a clamping Jaw 35 which can be tightened around the handlebar by means of the bolt 29. Transversely to the head of the bolt 29 there extends an eccentric 30. This is connected to a rocker arm 31 in such a manner that the eccentric can release the grip of the clamping jaw around the handlebar and the frame so that the handlebar, when in the released state, is able to be tipped as indicated with stippled lines in fig. 2, and also turned to one of the sides as indicated by the arrow in fig. 3. After adjustment, the clamping arm 31 can turn the eccentric back to the clamping position, whereby the handlebar is secured.

The handlebar 10 can thus be adjusted to suit the user's height and the working conditions in general. Similarly, it can be tipped downwards, whereby the machine occupies the least possible space.

Particularly with larger and heavier machines, there can be need for a greater clamping effect around the handlebar 10 in order to ensure stable fastening. This can be achieved by configuring the clamping jaw 35 as shown in fig. 4a, where the upper part extends to the pivot plate 32 with the clamping bolt 34, while the underlying part extends to the fixture at the clamping bolt 29.

The pressing-down of the handlebar 10 will thus result in a considerably greater compression of the clamping jaw 35 around the handlebar 10, in that the underlying part of the clamping jaw will be pressed upwards. It is thus ensured that the handlebar 10 is firmly clamped when it is pressed downwards for the tipping of the machine.

The coupling system will now be described in more detail.

As shown in figs. 2, 5 and 6, the coupling system comprises a fixed part 9 which can be configured as a normal hand grip inserted externally at the end of the handlebar 10.

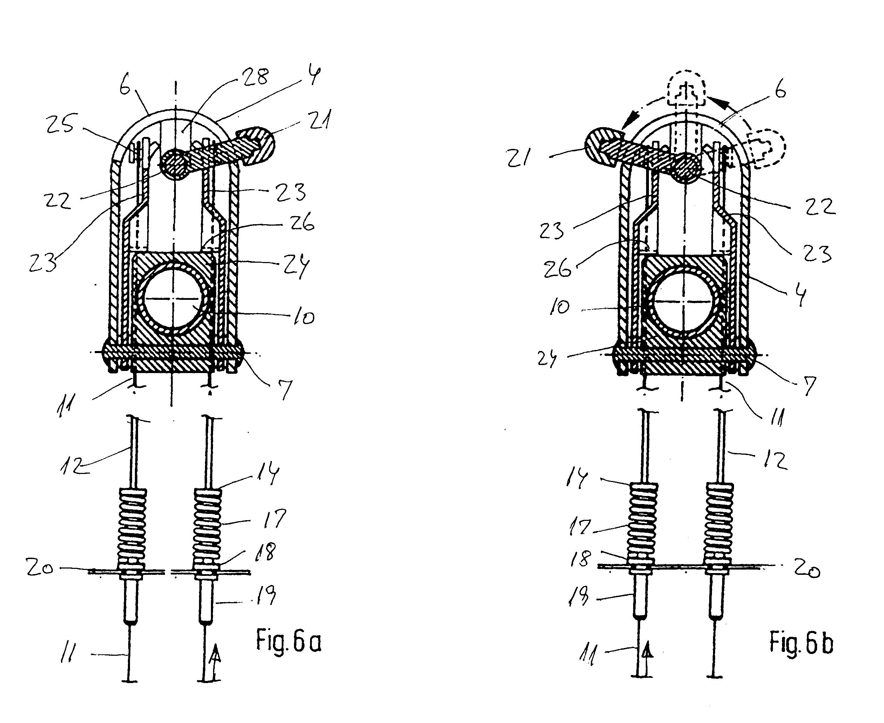

Around the handlebar 10 there is also secured a bearing bush 24, the underside of which is provided with a bore for a throughgoing axle 7. The sides of the bush 24 extend vertically, as shown in fig. 6, so that a carrier 23 can be housed on the axle 7 on each side of the bush 24.

The carrier 23 is configured as a cranked plate arm which extends up over the bush 24 so that a cable 11 can be secured to a fixture 25 in the upper part of the carrier 23. Moreover, the carrier 23 is provided with a stop 26 to limit the dropped-down position of the carrier. The top of the carrier is provided with a gate 27 for a pawl 8.

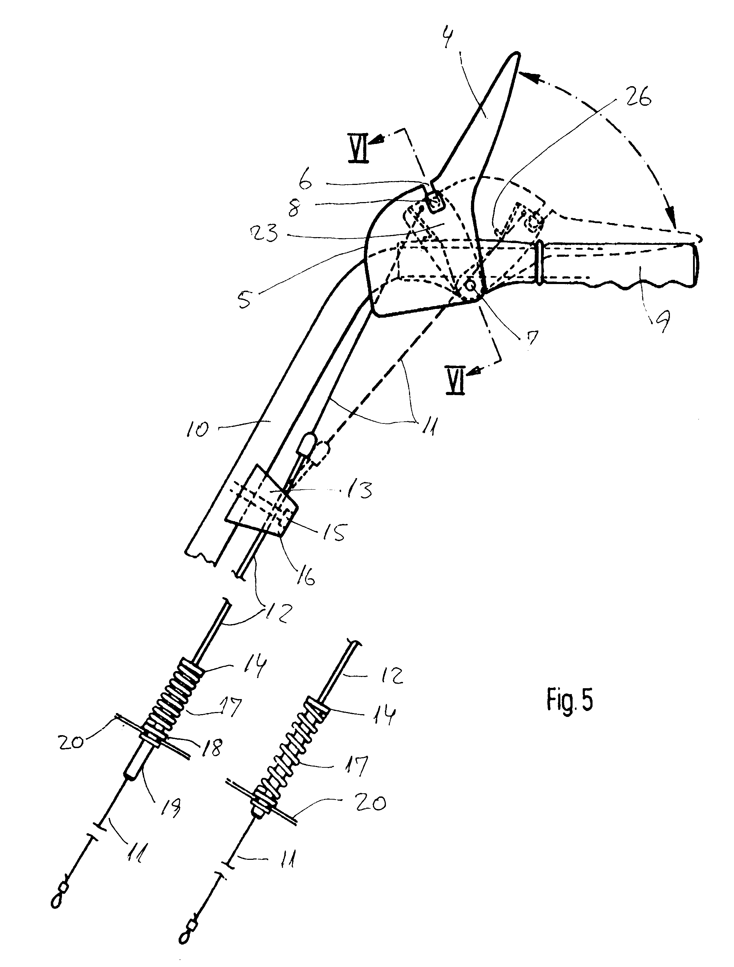

The movable lever 4 is suspended at its outermost part to the same axle 7, and is configured as a section of a tube which can surround the fixed part 9 when the parts are moved downwards into the system's activated position, as indicated with stippled lines in fig. 5.

To the front, the movable lever is enclosed within a shield 5 which extends on both sides and frontwards to cover the lever in both of its positions.

In the upper side of the movable lever 4 there is also formed a transverse slot 6 in which the pawl 8 can move from side to side, as indicated in fig. 6b.

As shown in fig. 6, the pawl 8 is mounted on an axle journal 22 in a bearing 28 which is secured to the internal upperside of the movable lever.

On the outwardly-extending part of the pawl 8 there is secured a knob 21, and thus the pawl can easily be turned between the two gates 27 in the carriers 23, or into the mid-position in which the coupling lever is completely disengaged.

The control cable will now be described with reference to figs. 2, 5 and 6.

The control cable comprises a cable tube 12 in which a cable 11 is inserted. The cable normally consists of a wire.

At the coupling system 1 the wire is secured to the carrier 23, for example by means of an eye on a pin for the formation of the fixture 25.

On the handlebar 10, at a suitable distance from the hand grip, the cable tube 12 is secured to the frame by means of a clamping block 13 with a clamping piece 16 which, by means of a screw 15, can clamp the tube 12 firmly to the handlebar.

The lower end of the cable 11 can similarly be provided with an eye which can engage with the coupling arm which is required to be activated.

At this coupling arm, a bush 18 is secured to a frame part 20. The outer side of the bush forms the contact face for a coil spring 17, this spring being a compression spring. The opposite end of the spring lies up against a second bush 14, the opposite side of which forms the seating for the lower end of the cable tube 12.

To the inside of the second bush 14 there is secured a tubular bush 19. This bush extends in between the spring windings and extends out through the lower bush 18, so that the cable 11 can pass freely through the bushes 14, 18 and the tube 19.

When the control cable is mounted, it is adjusted so that the spring 17 is compressed, as shown in the example to the left in fig. 5.

With this setting, the cable 11 will be drawn into the cable tube 12 when the movable lever 4 of the coupling system is activated. As indicated with stippled lines in fig. 5, in the activated position the cable 11 will lie tightly up to the centreline of the axle 7, whereby the lever arm is reduced so much that the lever 4 and the grip 9 can easily be held together.

When the lever is released, the lever arm increases so that it is always ensured that the lever is deactivated and will thus decouple upon being released.

Gradually, as drive belts and chains get worn, they will stretch, and thus the control cable will need to be adjusted. This is effected by the spring 17 automatically compensating for this increase in length, as indicated in the example to the right in fig. 5. The control cable will thus be self-adjusting, and the need for adjustment of the control cable is completely eliminated.

When the coupling lever is to be used, the user selects the desired activation, such as forwards, reverse, neutral or the like, by setting the knob 21 on the pawl arm 8. Hereafter, the movable part of the system can be pivoted around the axle 7, hereby increasing the distance of the cable 11 from the secured cable tube 12. The cable 11 is thus drawn into the tube 12, and the coupling will take place. When the coupling lever is released, it will automatically set itself for decoupling, since the movable part will be drawn outwards into its deactivated position.

## Claims

1. Coupling system, preferably for use on a machine which is required to be operated by remote control, and comprising a coupling grip with a fixed and a movable part, and with a control cable comprising an outer tube with an inner cable which is secured to the movable part and extends to an operating part such as a coupling arm, so that the coupling arm is moved when the movable part of the coupling system is activated, **characterized** in that the movable part (4) of the coupling system is configured as a section of a tube which can surround the fixed part (9) of the grip when the grip (1) is activated.

2. Coupling system according to claim 1, **characterized** in that the cable (11) is secured to a carrier (23) which is provided with a gate in the form of a slot (27) in which a pawl (8), secured to and extending outwards from the movable part (4) of the grip, can be inserted.

3. Coupling system according to claims 1 and 2, **characterized** in that there are two carriers (23), each with its separate cable (11), and in that the pawl (8) can be selectively inserted into the gates (27) for the activation of one of the cables (11).

4. Coupling system according to claims 1-3, **characterized** in that the movable part (4) of the system and the carrier(s) (23) are mounted on the same axle (7) which is mounted (24) on the fixed part (9) of the grip.

5. Coupling system according to claim 4, **characterized** in that the axle (7) is housed behind the cable(s) (11) and close to its/their activated position.

6. Coupling system according to claim 1, **characterized** in that the outer tube (12) of the control cable at the coupling lever (1) is secured to the fixed part (10) of the machine by means of a clamp (13, 15, 16) which can be loosened and tightened for the adjustment of the control cable (2).

7. Coupling system according to claim 6, **characterized** in that outer tube (12) at the coupling arm lies against a bush (14) for a compression spring (17), the other end of which rests against the fixed part (20) of the machine.

8. Coupling system according to claim 7, **characterized** in that the bush (14) is mounted at the end of a tubular bush (19) which extends inside the spring (17), and which can be moved in relation to the fixed part (20) of the machine in the direction of compression of the spring (17).
